# EUROPEAN PATENT APPLICATION

(11) **EP 3 073 711 A1**
(43) Date of publication of application: **28.09.2016**
(21) Application number: 16161999.4
(22) Date of filing: 23.03.2016
(51) Int. Cl.: H04L 29/08, H04L 29/06

(54) **DISTRIBUTED MICROCACHING FOR CONTENT DELIVERY**

(30) Priority: 23.03.2015 US 201514665584
(71) Applicant: Comcast Cable Communications, LLC, Philadelphia, PA 19103 (US)
(72) Inventor: ELSLOO, Jeffrey, Centennial, Colorado 80121 (US); STORY, Marc, Philadelphia, PA 19103 (US)
(74) Representative: V.O.

(57) **Abstract**

To fulfill a request by a user for media or data content, disclosed methods and systems provide for delivering the content item from a content delivery network and an initial portion of the content item from a cache residing in one or more local devices that are in communication with the user system. To locate the requested content, the user system may use one or more manifests of available cache locations and content. The local devices may provide cached content to the user system via a wireless network, which may be a mesh WiFi network.

## Description

### CROSS REFERENCE TO RELATED APPLICATION

This application claims the benefit of U.S. Patent Application No. 14/665,584, filed March 23, 2015, the entirety of which is incorporated by reference herein.

### BACKGROUND

Content delivery networks such as television networks, internet service provider networks, and communication networks, deliver data and media content in a variety of formats via a variety of technologies, such as quadrature amplitude modulated signals and internet protocol digital packets delivered via coaxial cable and/or optical fiber, twisted pair, wireless, or other systems. Devices for obtaining, viewing, and/or using content can similarly take a variety of forms, including, for example, smart phones, tablet computers, gaming consoles, cable television set-top boxes, to name but a few. Each such user system may be adapted in its own way to allow the user to select, acquire, view, and/or use media and data content, and a need exists to deliver content quicker and in a required format. These and other needs are presented and addressed in this disclosure.

### SUMMARY

Applicants disclose, in one aspect, employing distributed caching to deliver content to end user devices. Users of content delivery systems such as, for example, television networks may have experienced delays between the time that they select a channel and the time when the content for the selected channel is presented to the user. According to an aspect of the disclosed embodiments, cached data corresponding to a request may be located and provided in response to a user request so as to minimize delay in beginning the delivery of content to the user.

In order to fulfill a request by a user for media or data content, a user system may seek the content, or a portion of the content, from two or more sources at the same time. The user system may, for example, send both a request for the desired content item to a content delivery network, and a request for an initial portion of the desired content item to a local cache device (or another type of storage device). In order to better tailor requests for content, the user system may refer to one or more manifests to identify the locations and content of caches residing on nearby devices.

In response to a request, the user system may receive a transmission containing a first portion of the desired content item from a local device. The transmission may be received via a wireless network, which may be, for example, a mesh WiFi network and/or another network. The user system may provide this first portion of the desired content item to the user before and/or until a transmission of the desired content becomes available from the content delivery network. The content delivery network may provide the desired content item, for example, in quadrature amplitude modulated and/or IP protocol packet form. Upon receiving the content from the content delivery network, the user system may seamlessly switchover to presenting the content from the content delivery network using timestamps or other markers in the content to synchronize it with the first portion of the content previously provided by the local device. Similarly, other kinds of data, such as large image or software files, etc., may be assembled from segments received from multiple sources.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to limitations that solve any or all disadvantages noted in any part of this disclosure.

### BRIEF DESCRIPTION OF THE DRAWINGS

The following description of the illustrative embodiments may be better understood when read in conjunction with the appended drawings. It is understood that potential embodiments of the disclosed systems and methods are not limited to those depicted.
FIG. 1 is a block diagram of an example of a content distribution system.
FIG. 2 is a message flow diagram of an example process for obtaining content using multiple requests.
FIG. 3 is a message flow diagram of an example process for collecting content manifests.
FIG. 4 is a message flow diagram of an example process for obtaining content using two or more requests.
FIG. 5 is a block diagram of an example node of a content delivery network.
FIG. 6 is a block diagram of a stationary user system.
FIG. 7 is a block diagram of mobile user system.

### DETAILED DESCRIPTION

In order to fulfill a request by a user for media or data content, a user system may seek both a transmission, e.g., a stream, of the desired content item from a content delivery network, and a transmission from a cache of an initial portion of the desired content item. Such a cache may reside in one or more local devices that are in communication with the user system. To locate and request cached content, the user system may refer to one or more manifests which list the locations and content of available caches. The local devices may provide cached content to the user system via a wireless network, which may be a WiFi mesh network and/or another type of a wireless network. The content delivery network may provide content in quadrature amplitude modulated and/or IP protocol packet form.

Example networks, processes, and devices useful for enabling a system to quickly and efficiently obtain media and data content from multiple sources are described below.

### Example Content Delivery Network

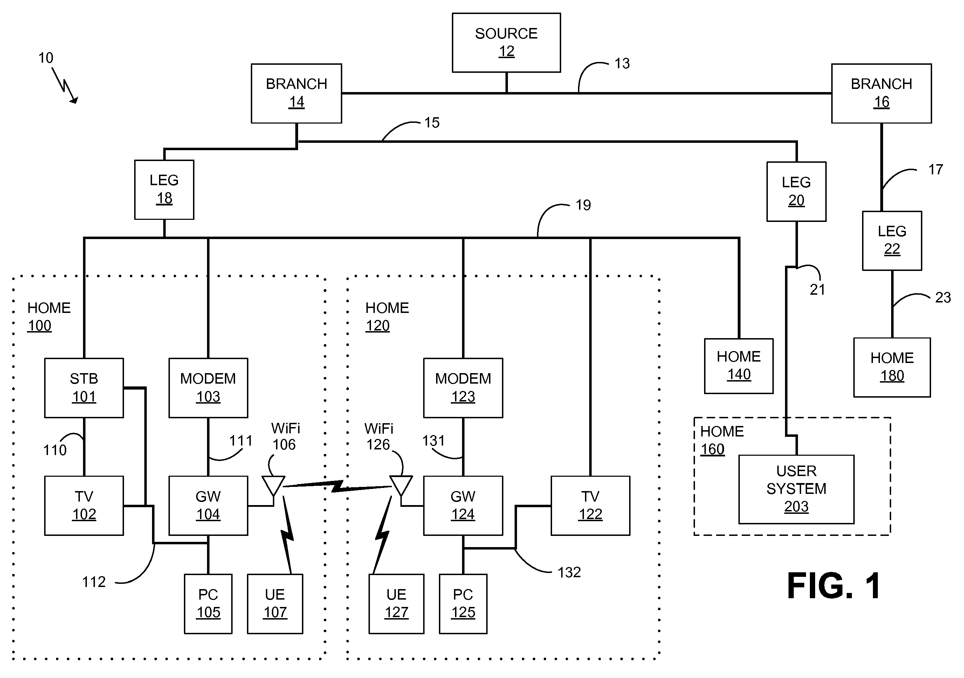

FIG. 1 is a block diagram of an example content distribution system 10. A content source, such as a central location or head end, 12 of the upstream content delivery network (CDN) feeds media transmissions, such as linear and time-shifted media, on-demand media, data content, etc., down to branch nodes 14 and 16 via a network 13. The nodes 14 and 16 may comprise any suitable networking devices, systems, and sub-networks for routing content data and may comprise, for example, a variety of digital and/or analog buffers, multiplexers, caches, routers, repeaters, amplifiers, encoders, decoders and the like. Network 13 may encompass any suitable networking links including, for example, microwave, satellite, optical fiber, or coaxial links, alone or in combination, for one-way and/or two-way links for content in a variety of formats. The branches 14 and 16 pass content to local branch legs 18, 20 and 22 via networks 15 and 17. Similar to the branches 14 and 16, the legs 18, 20, and 22 may incorporate a variety of analog and digital technologies. Like network 13, networks 15 and 17 may incorporate a variety of physical media and transmission mechanisms.

The legs 18, 20, and 22 feed content to the points where it is presented for consumption or further processing by users. In the example depicted in FIG. 1, these points are shown as premises 100, 120, 140, 160, and 180, such as homes, businesses, indoor or outdoor locations, which are coupled to branch legs 18, 20, and 22 via networks 19, 21, and 23 respectively. In practice, content consumption points might also include places of business or governmental offices, for instance, in addition to residences. Similarly, a residence may take a variety of forms, such as a single family dwelling, a unit in a multi-tenant building, or a room or suite in a school dormitory or hotel, to name but a few. The networks 9, 21, and 23 may be optical fiber, coaxial, twisted pair, plain old telephone line (POTS) connections, satellite link, or wireless (e.g., cellular) connections, for instance, or a combination thereof. In the case of coaxial or fiber connections, the content may be delivered to the homes 100, 120, 140, 160, and 180 as quadrature amplitude modulated (QAM) digital data transmissions.

The home 100 may comprise a variety of devices adapted for requesting and receiving content. For example, there is a processors in the form of a set-top box (STB) 101 which connects to the leg 18 via the network 19 receives data from the content delivery system. The STB 101 may be a tuning device, incorporating a digital video recorder (DVR) or connected to a remote DVR, and accepting commands from a handheld wireless remote control, for instance. The STB 101 might also be a gaming console or a similar media content appliance. The STB 101 may incorporate one or more QAM tuners or other coding and decoding mechanisms for receiving data and/or sending requests over the network 19. The STB 101 is connected to a display device such as a television (TV) 102 over a video link 110. The display device 102 may be any system suitable for presenting video content including, for example, a conventional television with channel tuning capability, a digital display, or a video projector. The video link 110 may be any suitable link for communicating video data including, for example, an HDMI, a VGA, an RGB, or an equivalent video link. In an alternative embodiment, content and data may be delivered directly to the display device 102 without passing through an intermediary device such as STB 101.

The home 100 has a modem 103 which provides a second communication link to the network 19. The modem 103 could be a digital subscriber line (DSL) or POTS modem, or some other form of interface depending on the nature of and configuration of network 19. It may also contain one or more QAM tuners. Modem 103 is connected to a gateway (GW) 104 via a data link 111. The GW 104 may comprise a digital bridge, router, repeater, multiplexer, or the like. The data link 111 may be an optical fiber, twisted pair, or coaxial cable connection, a wireless link, or the like.

The devices in the home 100 may be networked in any suitable manner. For example, an in-home network 112, which may be a twisted pair Ethernet network, may be rooted at the GW 104. Using the network 112, a personal computer (PC) 105 may connect to the content delivery system via the GW 104, the modem 103, and the network 19, etc., which together create a path for network, e.g., Internet, services to be provisioned to the PC 105. A user equipment (UE) 107 in the home 100 may connect to the in-home network 112 via a WiFi access point 106 connected to the GW 104. Similarly, the UE 107 may connect to the broader content delivery system via a path created by the WiFi 106, the GW 104, the modem 103, and the leg 18. The UE 107 may be any suitable personal electronics device, such as, for example, a cellular telephone handset, a smart phone, a tablet computer, a laptop computer, etc.

The STB 101, the TV 102, the modem 103, and the PC 105 might also be equipped with wireless transceivers and therefore able to communicate directly with each other and/or the UE 107 and other devices within range of the wireless signal. Devices equipped with wireless transceivers may be within range and able to communicate with similarly equipped devices in other homes.

Other homes may be identically equipped, or use similar devices to achieve similar functions. For example, the home 120 is shown as having no STB. A TV 122 is connected directly to the router on network leg 18 via the network 19. A modem 123 connects via a data link 131 to a GW 124, or, alternatively, one computing device may comprise the functionality of the modem 123 and the GW 124. The GW 124 is the root of an in-home network 132 which connects to the TV 122, and a PC 125. The GW is also connected to a WiFi access point 126. There is a UE 127 in the home 120 which connects wirelessly to WiFi 126.

If all of the devices in the home 100 and the home 120 are equipped with wireless transceivers and all are within range of each other, numerable direct or mesh connections are possible. In addition, numerous indirect pathways may exist between devices in the homes 100 and 102 when the in-home network connections are considered. Further, when the networks 19, 21, 23, 15, 17, and 13 are considered, devices in each of the houses 100 and 102 may have thousands of connections of varying directness to devices in other homes.

Content may be consumed in the home in a variety of ways on a variety of apparatuses. For example, a user in the home 100 may watch a video program transmission (e.g., a broadcast, multicast or unicast transmission that may be streamed, downloaded, etc.) on the TV 102 by using a remote control to adjust a QAM tuner in the STB 101. He may watch the same broadcast on the PC 105, e.g., by selecting the content via an Internet web browser. Alternatively he may view the same broadcast on the UE 107, e.g., using a software application (app) on the UE 107. Similarly, he may order on-demand content using any of these three apparatuses. He may also order content which is not entertainment media. For example, he may request a lengthy operating system upgrade for the UE 107 to be delivered from the source 12, via the branch 14, the leg 18, the modem 103, the GW 104, and the WiFi 106.

The home 160, for example, has a user system 203 of unspecified type. The user system 203 could be any of the in-home devices described above, or any combination thereof, that a user in the home 160 uses to receive, view, or otherwise consume media and/or data content.

When a user requests content, he may have to wait some time to receive it. For example, if a user in the home 100 is viewing content on the TV 102 and uses the remote to change the STB 101 to receive an on-demand video program, the STB 101 may have to alter how a QAM tuner is adjusted, or, in an internet protocol delivery system, the TV 102 or an associated device may have to join a new transmission. The STB 101 may also have to negotiate with the leg 18 for a channel on which to receive the content. The leg 18 may not have the content immediately available, and may therefore have to negotiate with the branch 14 to start receiving the content. The branch 14 may need to request the content from the source 12, which may have to request it from, for example, a national head end office not shown in FIG. 1. Each hop - from channel to channel on the STB 101, from the STB 101 to the leg 18, from the leg 18 to the branch 14, etc., and back again - takes time. Meanwhile the user may be looking at dead air.

A STB, such as one equipped with multiple QAM tuners and a DVR, may be able to pre-store, at a local or remote memory, content that a user is likely to request. For example, if a user is watching a live television program on channel 24, and the STB has two QAM tuners not in use, the STB can tune these tuners to channels 23 and 25, on the theory that these are the channels to which the user is most likely to "surf" next. Similarly, the STB may set the unused QAM tuners to two channels that the user is likely to next select, based on the users observed behavior at certain times of day and/or days or the week. Doing so reduces the time it takes to switch to one of these transmission of content. Such a STB may store on the DVR a portion or the entirety of a transmission to which each tuner is tuned. A viewer may quickly access any stored content directly from the DVR.

In the highly interconnected home 100, there are other options for quickly retrieving content so as to minimize the amount of delay/dead air the user may experience. For example, consider a scenario where a first user in the home 100 is watching a content transmission on the TV 102, while a second user is watching a special, such as a live selection, such as a sporting event, on the UE 107. Hearing cheering from the room in which the second user is viewing the game, the first user decides to tune into the game, hoping to catch the replay. Using the remote control, the first user selects the on-demand game content. This request propagates up the content distribution system, as the first user waits.

Meanwhile, a copy of a portion of the desired content item - perhaps a two to four second MPEG clip - may be resident in a cache in either the modem 103, the gateway 104, the WiFi access point 106, or the UE 107. The STB 101 may be configured to send both a first request for the desired content item to the content delivery system and a second request for the desired content item to the devices on the in-home network 112 and on the WiFi 106. Any device holding a cache of a portion of the desired content item may then respond by providing that portion of the content to the STB 101. The STB 101 may then immediately play the content for the first user. When the leg 18 begins to deliver a stream (or another type of transmission) of the desired content item to the STB 101, the STB 101 may seamlessly switch to the new stream from the cached content by, for example, observing the timestamps or other markers in the content stream. From a user's perspective, the switchover may be undetectable in the presented synchronized media presentation. Similarly, other kinds of data, such as large image or software files, etc., may be assembled from segments received from multiple sources.

The potential caches available to the user in home 100 include all of the devices in the home 100. Via the network 19, the devices in the home 100 also have access to any caches of on the leg 18 and in the homes 120 and 140. Through a further hop through the leg 18, the STB 101 also has access to any caches on branch 14 and leg 20. Similarly, through a further hop through the leg 20, the STB 101 can reach any caches on the user system 203 in the home 160. Through further hops, the STB 101 may reach caches in the source 12, the branch 16, the leg 22, and the home 180. In the end, however, the fewest hops may be in the connections between the STB 101 and wireless enabled devices in the home 100 and the home 120. It depends upon where caches of portions of the desired content item reside at the time that it is sought.

### Example Content Delivery Processing

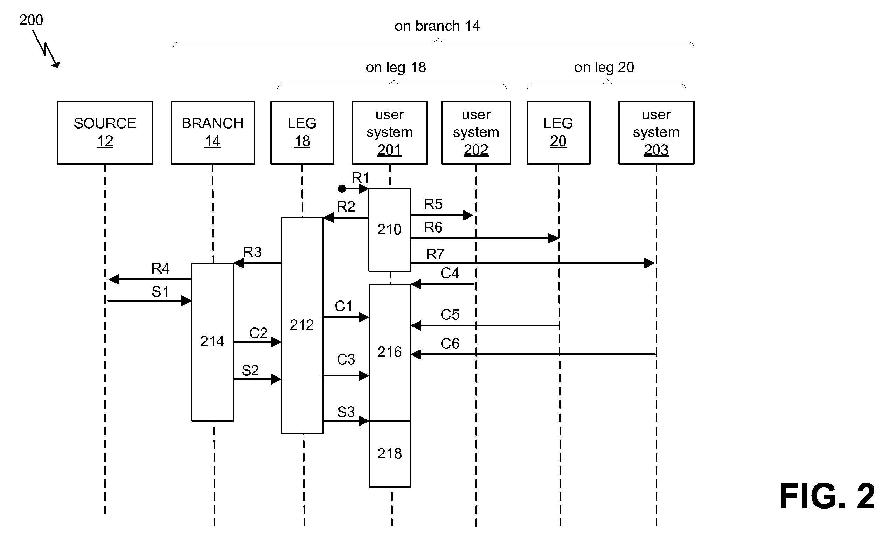

FIG. 2 depicts an example process 200 by which a user system 201 delivers content to a user both from one or more CDN devices and from one or more local cache sources. The user system 201 of FIG. 2 comprises the TV 102 and/or other devices in the home 100 of FIG. 1, such as the STB 101, GW 104, etc. Similarly user system 202 and user system 203 of FIG. 2 comprise equipment found in homes 120 and 160 of FIG. 1.

The process 200 begins at R1 when the user system 201 accepts a selection of a desired content item. This may be the result, for example, of a user clicking a button on the remote when a potential item of content is highlighted on a menu presented on the television. The user system 201 initiates a process 210 to seek out a source of the desired content item. In the process 210, the user system 201 may first seek the content among its own resources. It may find that such content is already immediately available. For example, the user system 201 may find that the desired content item is already receiving the desired content item on a QAM channel to which the user system 201 is already tuned. Alternatively, the user system may have at least a portion of the desired content item immediately available because it is partially cached or wholly contained in the memory of the user system 201, e.g., residing on the DVR. By the same token, the user system 201 may find that the desired content item is not immediately available. It may be that the desired content item is being transmitted to the user system 201 on a QAM channel to which the user system 201 is not tuned, and it will take some time to tune to the desired channel. The user system 201 may find that neither the content nor any portion of it is on the DVR or otherwise in memory. It is possible that the content is not now and never has been being transmitted to the user system 201.

If the desired content item is not immediately available, in the process 210 the user system 201 generates and sends a request for the content R2 to leg 18. The leg 18 receives the message R2 in a process 212 and checks whether the desired content item is already being transmitted to the leg 18. If the desired content item is already being transmitted to the leg 18, then in the process 212 the leg 18 will begin sending the desired content item in a transmission to the user system 201. However, in the example of FIG. 2, the leg 18 is not already receiving a transmission of the desired content item. Therefore, in the process 212 generates and sends a request for the desired content item R3 up to the next level of the CDN at the branch 14. Next in the process 212, the leg 18 checks whether a portion of the desired content item resides in a cache on the leg 18. If so, in the process 212, the leg 18 provides a portion of the content to the user system 201 via a cache transmission C1.

At a process 214, the branch 14 receives the request for content R3 and responds by checking whether the branch 14 is already receiving a transmission of the desired content item. If the branch 14 is not already receiving a transmission of the desired content item, as in the present example, in process 214 the branch 14 generates and sends a request for the desired content item R4 to the source 12. Next in the process 214, the branch 14 checks whether it has a portion of the desired content item cached. If so, in the process 214 the branch 14 sends a portion of the desired content item to the leg 18 in a cache transmission C2. Cache transmission C2 is received by the process 212 running on the leg 18, which then relays the portion of desired content to the user system 201 in a cache transmission C3.

In the example of FIG. 2, a process 216 receives multiple cache transmissions. The cache transmissions C1 and C3 arrive from the process 212 running on the leg 18. In response to receiving a cache transmission, in the process 216 the user system 201 may immediately begin to deliver the desired content item to the user. If multiple cache transmissions are received, the UA may select whichever arrives first or use some other criteria, such as how timely or lengthy the cache transmission is, to determine which to play for the user.

In addition to traversing the network hierarchy via messages to devices above the user system 201, in the process 210 the UA can seek cached content from other devices. In the example of FIG. 2, the user system 201 additionally sends requests for the desired content items R5, R6, and R7 to the user system 202, the leg 20, and the user system 203 respectively. Referring to FIG. 1, the user system 202 is connected to the leg 18 along with the user system 201. However, if both the user system 201 and the user system 202 are equipped with WiFi and within range of each other, it may be quicker for the message R5 to reach the user system 202 via WiFi, rather than through the network 19 and/or any switching at the leg 18, for example, that might be necessary for a wire connection. In terms of wired hops, the leg 20 and the user system 203 are even more remote from the user system 201. However, if those devices are also equipped with WiFi and within range, they may be reached by the user system 201 via the process 210 just as quickly as the user system 202.

Alternatively, the messages R5, R6, and R7 may be routed through the CDN. Specifically, the message R5 could be sent to the leg 18 which then forwards it to the user system 202. Similarly, the messages R6 and R7 could be sent to the leg 18 which then forwards them to the leg 20. The leg 20 would then forward the message R7.

If the user system 202, the leg 20, or the user system 203 has a cache of a portion of the desired content item, it may then send it back to the cache receiving process 216 running on the user system 201, in cache transmissions C4, C5, and C6 respectively. In the process 216, the user system 201 may begin playing content for the user as soon as an adequate portion of the content is received from any source. In FIG. 2, C4 is shown as arriving first, followed later by C5 and C6. Meanwhile, cache transmissions C1 and C3 are arriving from the CDN through content request servicing processes 212 and 214 running on the leg 18 and the branch 14 respectively. The process 216 may use only one cache transmission, or it may cobble together a stream from multiple cache transmissions or portions thereof. The multiple cache transmissions of segments of the desired content item may be combined seamlessly into a properly synchronized media presentation by, for example, observing timestamps or other markers in each segment. Similarly, other kinds of data, such as large image or software files, etc., may be assembled from segments received from multiple sources.

After some time, the source 12 will begin to provide a transmission S1 of the desired content item to the branch 14. Such transmissions may include any kind of data, such as, e.g., video or audio streams, images, web pages, software upgrades, etc. In the process 214, the branch 14 receives the transmission S1 from the source 12. Optionally, the branch 14 processes the transmission S1 to generate a transmission S2, e.g., by converting the encoding of the transmission. Otherwise, in the process 214 the branch 14 simply forwards the unaltered transmission S1 as the transmission S2 to the leg 18. In the process 212, the leg 18 receives the transmission S2, optionally processes it, and sends it to the user system 201 as a transmission S3.

In the process 216, the user system 201 receives the transmission S3 and switches to a streamed content playing process 218. From the user's perspective, this may be accomplished seamlessly, whereby the user system 201 uses timestamps or other markers on the content stream to splice the newly arriving transmission S3 into what began as a cache. Similarly, other kinds of data, such as large image or software files, etc., may be assembled from segments received from multiple sources.

The process 200 incurred more overhead operations than would be required if the user system 201 had foreknowledge of where caches of the desired content item were located or not located. For example, whether or not the user system 202, the leg 20, and the user system 203 had a cache of the desired content item available, in the process 200 each would still need to process messages R5, R6, and R7. Further, the user system 201 had to generate and send these messages, and the networks had to carry the bandwidth of such messages, to no avail.

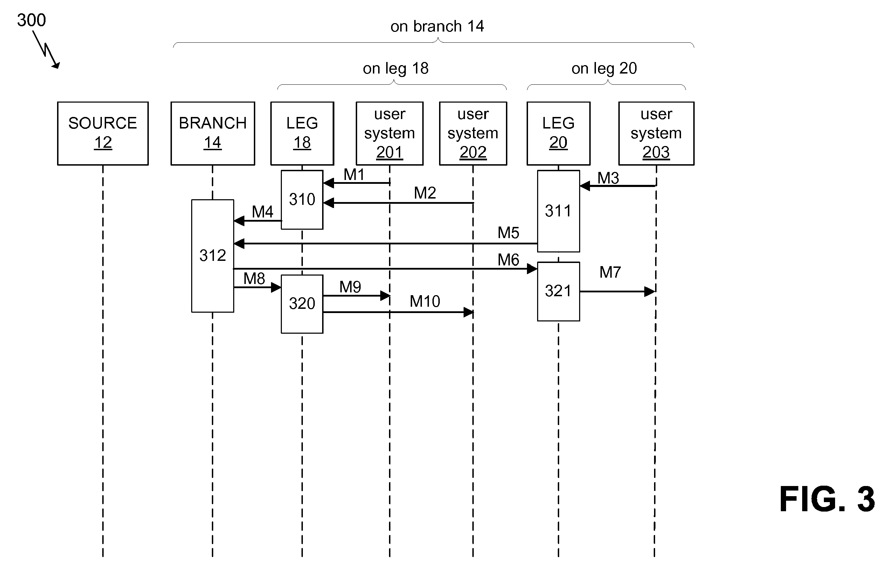

FIG. 3 depicts an example process 300 in which manifests of cached content are shared. A manifest may list some or all of the content that is cached on a device. For example, a manifest may identify streams of media content or other data stored on a DVR or in flash or RAM memory. A manifest may also identify contents in the caches of more than one device. It may identify the specific parameters of an item of content such as, for example, the start and stop timestamps of the cached portion of the content. Alternatively, it may specify general parameters such as, for example, that the cache contains the most recent four seconds of the content streaming on a particular television channel.

In the example of FIG. 3, the user system 201 generates and sends a manifest M1. The manifest is received by the leg 18 in a manifest collection process 310 running on the leg 18. User system 202 generates and sends a manifest M2, which is also received by the leg 18 in the process 310. In the process 310, the leg 18 consolidates information from the manifests M1 and M2 along with information about caches available in the leg 18 into a manifest M4 which it then sends to the branch 14 which receives it in a process 312. Similar processing is performed on the other leg 20. The user system 203 generates and sends a manifest M3 to the leg 20 which receives it in a manifest collection process 311. In the process 311, the leg 20 consolidates information from any received manifests (which in this case is only the manifest M3) along with information about any caches available on the leg 20 into a manifest M5, which it sends to the branch 14.

In the process 312, the branch 14 processes and consolidates the received manifests M4 and M5 along with information about any caches available on the branch 14 and sends a consolidated manifest M6 to the leg 20 and a consolidated manifest M8 to the leg 18. Leg 18 receives the manifest M8 in a manifest distribution process 320, and forwards versions of the manifest as manifests M9 and M10 to the user system 201 and the user system 202 respectively. The manifests M9 and M10 may be identical to the manifest M8, or they may be tailored by the leg 18 to the particular needs of their intended recipients. Similarly, the leg 20 receives the manifest M6 in a manifest distribution process 321. In the process 321, the leg 20 generates and sends a manifest M7 to the user system 203, where the manifest M7 may be tailored to the leg 20 for use by the user system 203 or identical to the manifest M6.

As a result of the processing, the user system 201 has received the manifest M9 by which it is aware of content available to it in caches residing on the devices on its branch of the CDN: leg 18, the branch 14, the user system 202, the leg 20, and/or the user system 203. Similarly, the user system 202 and the user system 203 are also aware of the caches available on this branch of the CDN through the manifests M10 and M7 respectively.

Consolidation of manifests can occur at any hierarchical level. For example, in the process 310, the leg 18 could have reported the information in the manifest M1 from the user system 201 back to the user system 202. Similarly, in the process 312, the branch 14 could have passed the received manifests M4 and M5 (or a consolidated manifest with such information) to a process running on the source 12. Also, user system 201 and user system 202, for example, could have exchanged manifests directly if they are so connected, e.g., via WiFi or over the network 19. The optimal specific processes of manifest exchange depend upon the specific network details and traffic loads.

Devices may additionally create manifests or portions thereof by inference. For instance, the leg 18 may know that a particular item of content is being transmitted to the user system 201, at the request of a user of user system 201, because the leg 18 recently processed that request. The leg 18 may additionally know that the user system 201, as a matter of policy, maintains a four second cache of all content it receives. In that case, the leg 18 would not need to be told by the user system 201 in manifest M1 that the cache exists, and therefore the leg 18 may report the existence of the cache in manifest M4 to the branch 14 - even if manifest M1 is never sent. The information inferred by the leg 18 about the unreported cache on the user system 201 can then be propagated to the leg 20 by the branch 14 in the manifest M6. Through manifest M7, the user system 203 would still know of the availability of the cache in the user system 201, even though the user system 201 never reported it. These kinds of inferences can be drawn at any level of the CDN network hierarchy or within a home.

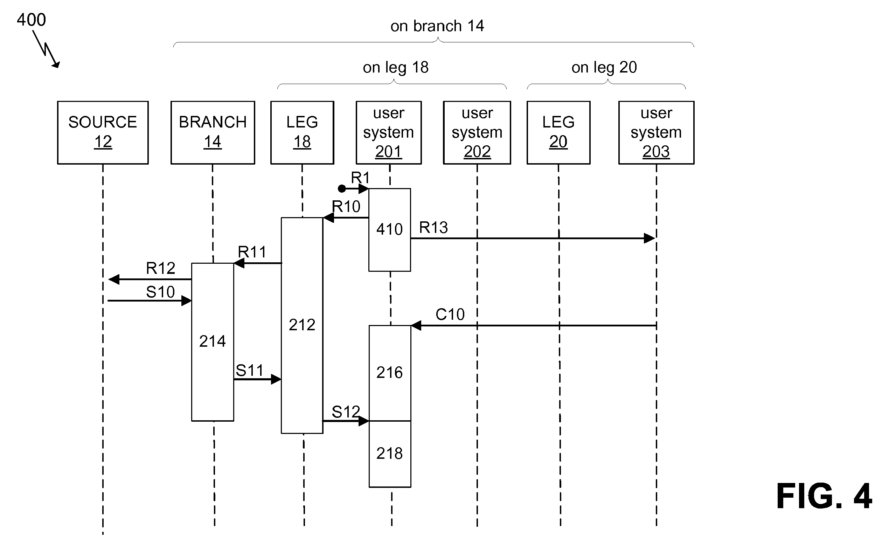

FIG. 4 depicts an example process 400 in which a user system takes advantage of a cache manifest to quickly obtain a portion of a desired content. At R1, the user system 201 accepts a selection of a desired content. The user system 201 initiates a process 410 to seek a source of the desired content item with the benefit of previously received manifests (e.g., such as may be received via the process 300 depicted in FIG. 3.) In the process 410, the user system 201 may find that the desired content item is already immediately available to the user system 201. For example, the UA may find that the desired content item is arriving in a transmission to which the user system 201 is already tuned, or resides in the DVR or other memory of the user system 201.

If the desired content item is not already being transmitted to the user system 201, the user system 201 sends a request up through the content delivery network. In the process 410, the user system 201 generates and sends a message R10 to the local leg 18. In the process 212, the leg 18 receives the message R10 and checks whether the desired content item is available as a transmission arriving at the leg 18 or a cache in the leg 18. In the example of FIG. 4, the leg 18 does not have a portion of the desired content item cached, and therefore is not able to provide it to user system 201 in a cache transmission as it did in the example of FIG. 2. Nor is the desired content item already being transmitted to leg 18. Therefore in the process 212, the leg 18 generates and sends a request for the desired content item R11 up to the next level of the CDN at the branch 14. In the process 214, the branch 14 receives the request R11 and checks for the content. Again in this example, the branch 14 does not have a portion of the desired content item cached and therefore is not able to provide it to the leg 18 in a cache transmission. And again, the desired content item is not already being transmitted to branch 14, so in the process 214 the branch 14 generates and sends a request for the desired content item R12 up to the next level of the network, the source 12.

In addition to initiating traversal of the network hierarchy in this manner, in the process 410 the user system 201 can seek cached content from peer devices according to received manifests. In the example of FIG. 4, the user system 201 happens to know from a manifest it received that a cache of a portion of the desired content item resides on the user system 203. Assuming that the wired network topography of FIG. 1 applies to the devices in FIG. 4, the user system 203 is more remote to the user system 201 than it is to the source 12. To reach the source 12 and back, message sequences originating at the user system 201 must make six hops: up to the leg 18; up to the branch 14; then up to the source 12; and then back down the same path. To reach the user system 203 and back from the user system 201, eights hops are required: up to the leg 18; up to the branch 14; down to the leg 20; then down to the user system 203; and then back around the same path. But assume here that, although being wired to different legs of the CDN, the user system 201 and the user system 203 are physically adjacent and enabled for direct wireless communications. For example, the user systems 201 and 203 may both be WiFi devices joined in a local mesh network. (Similarly, the user systems 201 and 203 may be able to establish a rapid indirect connection through such a mesh network.) In that case, with the foreknowledge of the cache in the user system 203, the user system 201 may immediately access the cache in the user system 203.

Referring again to FIG. 4, based on manifest information previously received, in the process 410, the user system 201 sends a targeted cache request R13 to the user system 203. The user system 203 responds by providing a cache transmission C10. The cache transmission is received by the process 216 running on the user system 201. In the process 216, the user system 201 provides to the user the portion of the content contained in the cache transmission C10. In this example, the process 216 continues with no further cache input. At some point, the source 12 begins to provide a transmission of the desired content item S10 to the branch 14. The branch 14 receives the transmission S10 in the process 214 and optionally processes it before providing the content as a transmission S11 to the leg 18. In the process 212, the leg 18 receives the transmission S11 and optionally processes it before providing the content to the user system 201 as a transmission S12. When the transmission S12 arrives, it is detected by the user system 201 in the process 216. The user system may then transition from providing the content item to the user from a cache to providing the content from a transmission in a process 218.

As compared to a process like the process 200 of FIG. 2, a process like the process 400 of FIG. 4 provides certain advantages. Traffic is substantially reduced. Fewer requests are sent and fewer cache transmissions are initiated. Overhead processing is therefore reduced or deferred. It is reduced to the extent that a search for content involves fewer requests or request broadcasts. It is deferred to the extent that the search for media is deferred to a manifest sharing process like the process 300 of FIG. 3. Deferred processing is advantageous because in that regime devices can respond to manifest requests as time or resources allow, as opposed to immediately in response to a user request.

### Example Content Delivery Node

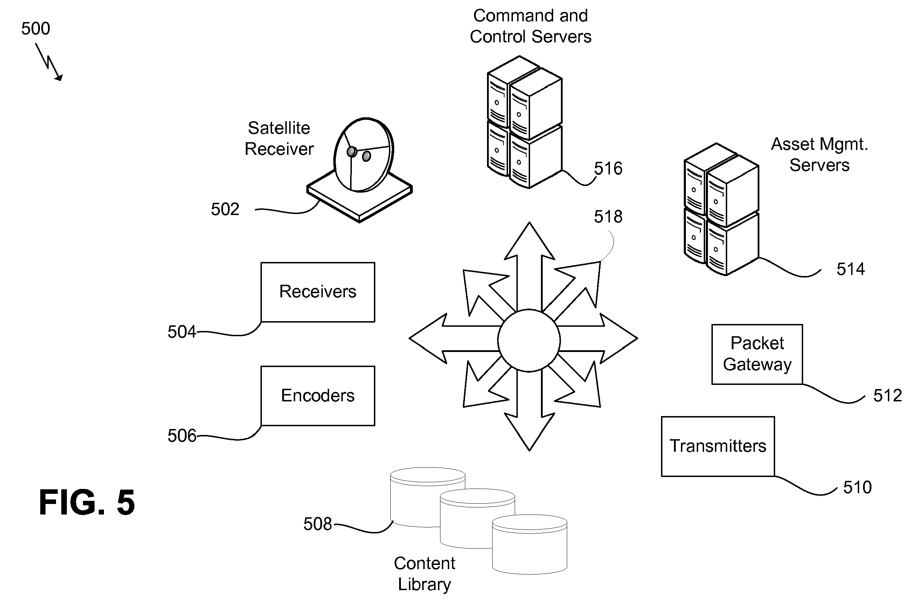

FIG. 5 depicts an example node 500 that may be used at a node of a content delivery network (CDN). Node 500 could serve, for example, as a head end, branch, or leg of a CDN. A system such as node 500 would normally include receivers 504, a packet network gateway 512, transmitters 510, and command and control servers 516. Such a node may also include other devices for obtaining, translating, storing, and controlling the flow of data and media content. Such other devices may include a satellite receiver 502, encoders 506, a content library 508, and asset management servers 514. All of these component devices of the node 500 may be interconnected in any number of ways, including through direct connections to each other, a central network 518, or a combination thereof, for instance. Other node devices, not depicted, may include, for example, a satellite uplink transmitter, decoders, digitizers, etc.

The node 500 may receive media and data content through the satellite receiver 502, the receivers 504, or the packet gateway 512. The content may arrive in a variety of formats and/or encodings. For example, the receivers 504 may receive digital feeds via optical fiber connections and/or quadrature modulated signals via coaxial cables. Similarly, the packet gateway 512 may bring in coaxial, optical fiber, or twisted pair feeds. The satellite receiver 502 may bring in modulated analog or digital signal feeds.

The node 500 may store media and data content in the asset management servers 514 or the content library 508. The asset management servers 514 may be any kind of computer, such as may be suitable for storing or buffering data services content. The content library may include a variety of storage technologies, such as disk arrays, and digital video recording devices of all kinds, such as may be suitable for storing, e.g., video-on-demand content.

The node 500 may translate data and media content, for example, using the encoders 506 and the transmitters 510. For example, analog feeds received at the satellite receiver 502 may be converted into MPEG video content by the encoders 506 before being stored in the content library 508. Similarly, MPEG content drawn from the content library 508 may be quadrature modulated by the transmitters 510 for transmission to other CDN nodes or to user premises.

The node 500 may control and coordinate its activities using the command and control servers 516. For example, the command and control servers 516 may process messages received from downstream CDN nodes and/or user premises received via coaxial cable, packet network, and/or satellite connections via the receivers 504, the packet gateway 512, or the satellite receiver 502 respectively. The command and control servers 516 may then instruct various component devices to take action. For example, the command and control servers 516 may instruct the asset management servers 514 to provide content downstream from the memory of the asset management servers 514, the content library 508, the packet gateway 512, the satellite receiver 502, and/or the receivers 504, any of which may be routed via the encoders 506 and the node network 518.

### Example Stationary or Mobile Computing System

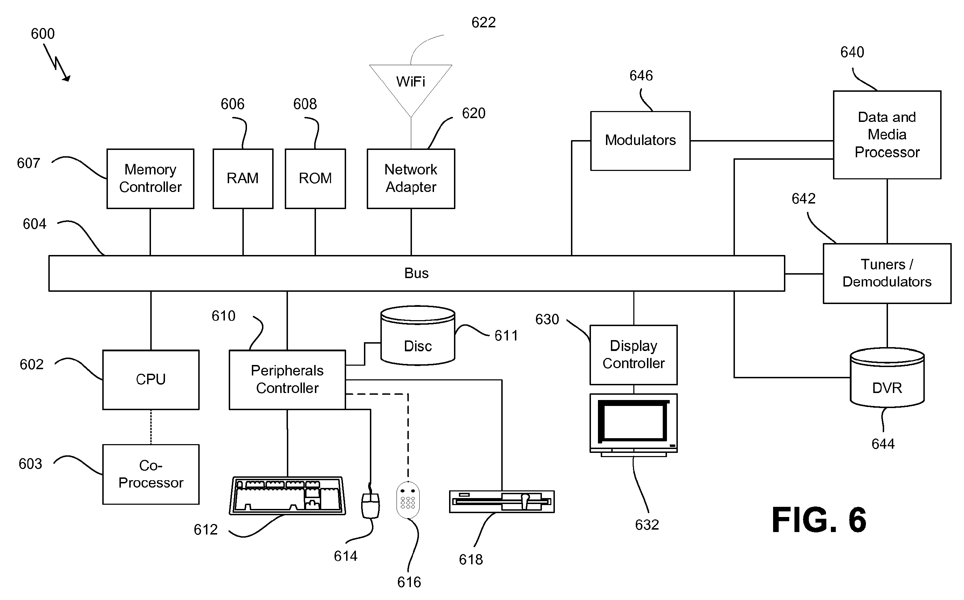

FIG. 6 depicts an example of a stationary or mobile user system 600 for obtaining and displaying data and media content. The system 600 may be an integrated device, but is more commonly implemented as a combination of devices. For example, a stationary system could consist of a gaming console connected to a handheld controller and a computer display. Alternatively a stationary system could be a television with a remote connected to a set-top box or router, or a personal computer system connected to a cable modem. The example system 600 of FIG. 6, is depicted as including a central processing unit 602 which is connected via a bus 604 to various standard computer elements such as a RAM 606 and a ROM 608 memory, a network adapter 620, a peripherals controller 610, a mass storage device 611 such as a disc or RAM drive, and an audio/graphics display controller 630. The CPU 602 may be implemented in any number of ways, such as in conjunction with a math, video, audio, or media coprocessor 603. The CPU 602 may be a traditional von Neumann architecture general purpose CPU executing instruction code sequences stored in the RAM 606, the ROM 608, and/or the mass storage unit 611, or it may be a programmed hardware device such as an application-specific integrated circuit (ASIC) or field-programmable gate array (FPGA.)

In addition to managing the mass storage device 611, the peripherals controller 610 is depicted as managing user interface features such as visual and audio indicators as LEDs, speakers, etc., or other indicators (not shown), such input devices as a keyboard or keypad 612, a trackball or mouse 614, and a remote control 616. Often such a system today includes a separate memory controller 607, a removable media drive 618, and a wireless adapter such as a WiFi transceiver 622.

The network adapter 620 allows the system 600 to connect to Internet protocol networks. As depicted in FIG. 6, the system 600 has certain CDN network connection features connected directly to the bus 604. The CDN connection features include a data and media processor 640, which may comprise a cable modem complying with the Data Over Cable Service Interface Specification (DOCSIS) standard. This data and media processor 640 may incorporate or be connected to one or more quadrature amplitude modulation (QAM) tuners and demodulators 642. The demodulators 642 may feed content either to the system bus 604 and/or directly to a digital video recorder (DVR) 644, for instance. The data and media processor 640 may receive instructions directly from the remote control 616 via a wireless link, such as an infrared optical or RF link, or indirectly via the peripherals controller 610 and the bus 604 in accordance with operations of the CPU 602. The system 600 is shown with an optional modulator 646 which may be used to encode and/or modulate data or media content for transmission via the data and media processor 640 to nodes on the CDN or peer devices on the same network leg as system 600.

The linkage between the display controller 630 and the display 632 may be of any kind. For example, it may be an HDMI, VGA, RGB, or equivalent video link.

The system 600 may be adapted to perform the processes described herein via software stored in the RAM 606, the ROM 608, or the mass storage 611, or via hardware programming of the CPU 602.

### Example Mobile Computing System

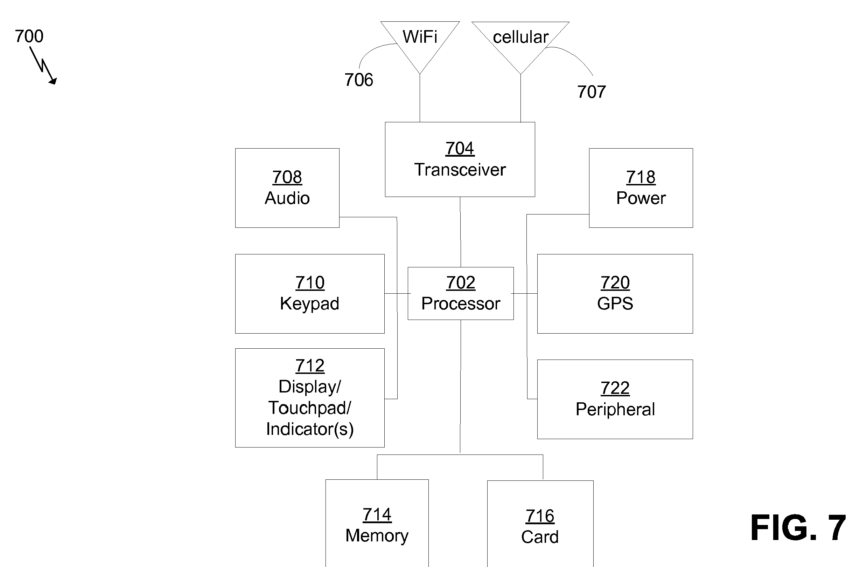

FIG. 7 depicts an example user system for obtaining and displaying data and media content in the form of a mobile apparatus 700. The apparatus 700 is a mobile computing device including a computer processor 702 and a communications transceiver 704. In this example, the communications transceiver is coupled to a WiFi transmit/receive element 706 and/or a cellular communications transmit/receive element 707. Alternatively such a device may have any number of transceivers serving any number of wireless subsystems, e.g., WiFi, cellular, infrared, near-field, etc. The apparatus 700 also has a non-removable memory 714 and a power source 718.

The apparatus 700 a user interface including such features as an audio interface 708 (e.g., a speaker and/or microphone), a keypad 710, and/or a display 712. The display 712 may be a touchpad and/or may include one or more other indicators such as LEDs. The apparatus 700 may also include a removable memory such as a memory card 716, a global positioning system (GPS) 720, and/or other peripherals 722, e.g., a USB port.

The processor 702 may be a general purpose processor, a special purpose processor, a conventional processor, a digital signal processor (DSP), a plurality of microprocessors, one or more microprocessors in association with a DSP core, a controller, a microcontroller, one or more Application Specific Integrated Circuits (ASICs), one or more Field Programmable Gate Array (FPGAs) circuits, any other type and number of integrated circuits (ICs), a state machine, and the like. The processor 702 may perform signal coding, data processing, power control, input/output processing, and/or any other functionality that enables the apparatus 700 to operate in a wireless environment. The processor 702 is coupled to the transceiver 70, which is coupled to the WiFi transmit/receive element 706 and the cellular transmit/receive element 707. The processor 702 may perform application-layer programs (e.g., browsers) and/or radio access-layer (RAN) programs and/or communications. The processor 702 may perform security operations such as authentication, security key agreement, and/or cryptographic operations, such as at the access-layer and/or application layer for example.

While FIG. 7 depicts the processor 702 and the transceiver 704, for example, as separate components, it will be appreciated that the processor 702 and the transceiver 704 may be integrated together in an electronic package or chip. Similarly, other components, such as the non-removable memory 702, and GPS chipset 720, for example, may be packaged or integrated with the processor 702 or with each other, for instance.

The transceiver 34 may be configured to modulate the signals that are to be transmitted by the transmit/receive element 36 and to demodulate the signals that are received by the transmit/receive element 36. As noted above, the apparatus 700 may have multi-mode capabilities. Thus, the transceiver 34 may include multiple transceivers for enabling the apparatus 700 to communicate via multiple radio access technologies (RATs), such as UMTS Terrestrial Radio Access (UTRA) and IEEE 802.11, for example.

The processor 702 may access information from, and store data in, any type of suitable memory, such as the non-removable memory 714 and/or the removable memory 716. The non-removable memory 714 may include random-access memory (RAM), read-only memory (ROM), a hard disk, or any other type of memory storage device. The removable memory 766 may include a subscriber identity module (SIM) card, a memory stick, a secure digital (SD) memory card, and the like. In other embodiments, the processor 702 may access information from, and store data in, memory that is not physically located on the apparatus 700, such as on a server, a home computer, or a stationary user system like the system 600.

The processor 702 and other devices on the apparatus 700 receive power from the power source 718. The processor 702 may be configured to distribute and/or control the power to the other components in the apparatus 700. The power source 718 may be any suitable device for powering the apparatus 700. For example, the power source 48 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 702 may also be coupled to the GPS chipset 720, which may be configured to provide location information (e.g., longitude and latitude) regarding the current location of the apparatus 700. Such information may be used by the apparatus 700, for example, to discover and join local wireless networks such as mesh networks.

The processor 702 may further be coupled to other peripherals 722, which may include one or more software and/or hardware modules that provide additional features, functionality and/or wired or wireless connectivity. For example, the peripherals 722 may include an accelerometer, an e-compass, a satellite transceiver, a sensor, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

The non-removable memory 714, removable memory 716, the processor 702, or any combination thereof may be configured to provide a cache for media or data content. Such cache may be used, for example, to store streams of media or data content and/or portions thereof. Such cache may be discoverable by other devices that are in communication with the apparatus 700.

The apparatus 700 may be adapted to perform the processes described herein via software stored in the processor 702, the non-removable memory 714, or the memory card 716.

It will be appreciated that while illustrative embodiments have been disclosed, the scope of potential embodiments is not limited to those explicitly described. For example, while the concepts are described with reference to particular user interfaces, the envisioned embodiments extend to any user interfaces that may be suitable for performing the described linking functions. Likewise, while particular content distribution technologies as DOCSIS, quadrature amplitude modulation (QAM), and IP protocol packet networking are referred to, any content distribution technologies may be used and still fall within the scope of envisioned embodiments.

Each of the processes, methods, and algorithms described in the preceding sections may be embodied in, and fully or partially automated by, code modules executed by one or more computers or computer processors. The code modules may be stored on any type of computer-readable medium or computer storage device, such as hard drives, solid state memory, optical disc, and/or the like. The processes and algorithms may be implemented partially or wholly in application-specific circuitry. The results of the disclosed processes and process steps may be stored, persistently or otherwise, in any type of non-transitory computer storage such as, e.g., volatile or non-volatile storage.

The various features and processes described above may be used independently of one another, or may be combined in various ways. All possible combinations and subcombinations are intended to fall within the scope of this disclosure. In addition, certain method or process blocks may be omitted in some implementations. The methods and processes described herein are also not limited to any particular sequence, and the blocks or states relating thereto can be performed in other sequences that are appropriate. For example, described blocks or states may be performed in an order other than that specifically disclosed, or multiple blocks or states may be combined in a single block or state. The example blocks or states may be performed in serial, in parallel, or in some other manner. Blocks or states may be added to or removed from the disclosed example embodiments. The example systems and components described herein may be configured differently than described. For example, elements may be added to, removed from or rearranged compared to the disclosed example embodiments.

It will also be appreciated that various items are illustrated as being stored in memory or on storage while being used, and that these items or portions thereof may be transferred between memory and other storage devices for purposes of memory management and data integrity. Alternatively, in other embodiments some or all of the software modules and/or systems may execute in memory on another device and communicate with the illustrated computing systems via inter-computer communication. Furthermore, in some embodiments, some or all of the systems and/or modules may be implemented or provided in other ways, such as at least partially in firmware and/or hardware, including, but not limited to, one or more application-specific integrated circuits (ASICs), standard integrated circuits, controllers (e.g., by executing appropriate instructions, and including microcontrollers and/or embedded controllers), field-programmable gate arrays (FPGAs), complex programmable logic devices (CPLDs), etc. Some or all of the modules, systems and data structures may also be stored (e.g., as software instructions or structured data) on a computer-readable medium, such as a hard disk, a memory, a network, or a portable media article to be read by an appropriate drive or via an appropriate connection. The systems, modules, and data structures may also be transmitted as generated data signals (e.g., as part of a carrier wave or other analog or digital propagated signal) on a variety of computer-readable transmission media, including wireless-based and wired/cable-based media, and may take a variety of forms (e.g., as part of a single or multiplexed analog signal or as multiple discrete digital packets or frames). Such computer program products may also take other forms in other embodiments. Accordingly, the present invention may be practiced with other computer system configurations.

Conditional language used herein, such as, among others, "can," "could," "might," "may," "e.g.," and the like, unless specifically stated otherwise, or otherwise understood within the context as used, is generally intended to convey that certain embodiments include, while other embodiments do not include, certain features, elements, and/or steps. Thus, such conditional language is not generally intended to imply that features, elements, and/or steps are in any way required for one or more embodiments or that one or more embodiments necessarily include logic for deciding, with or without author input or prompting, whether these features, elements and/or steps are included or are to be performed in any particular embodiment. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

While certain example embodiments have been described, these embodiments have been presented by way of example only and are not intended to limit the scope of the inventions disclosed herein. Thus, nothing in the foregoing description is intended to imply that any particular feature, characteristic, step, module, or block is necessary or indispensable. Indeed, the novel methods and systems described herein may be embodied in a variety of other forms; furthermore, various omissions, substitutions, and changes in the form of the methods and systems described herein may be made without departing from the spirit of the inventive concepts disclosed herein. The accompanying claims and their equivalents are intended to cover such forms or modifications as would fall within the scope and spirit of certain of the inventions disclosed herein.

Hereinafter, various characteristics of various embodiments of the invention will be highlighted in a set of numbered clauses or paragraphs. These characteristics are not to be interpreted as being limiting on the invention or inventive concept, but are provided merely as a highlighting of some characteristics of the invention as described in the description, without suggesting a particular order of importance or relevancy of such characteristics. The invention is only limited by the appended claims presented in the correspondingly named section. The number clauses include:
Clause 1. A method comprising:
   receiving a selection for a content item from a user device;
   sending a first request for the content item to a content delivery network;
   sending a second request for the content item to one or more local devices via a local network to which the local devices are connected; and
   receiving a first portion of the content item from a cache located on one of the local devices.
Clause 2. The method of clause 1, further comprising:
   receiving a second portion of the content item from the content delivery network.
Clause 3. The method of clause 2, wherein,
   sending the second request for the content item to one or more local devices comprises:
   sending the second request for the desired content via a wireless mesh network.
Clause 4. The method of clause 3, wherein,
   the wireless mesh network comprises two or more households.
Clause 5. The method of clause 2, wherein,
   receiving the second portion of the content item from the content delivery network comprises:
   receiving content modulated using quadrature amplitude modulation.
Clause 6. The method of clause 5, wherein,
   receiving the first portion of the content item comprises:
   receiving the first portion of the content item via a WiFi connection.
Clause 7. A method comprising:
   accessing one or more manifests of available cached content;
   receiving a selection for a content item from a user device;
   sending a first request for the desired content to a content delivery network;
   tailoring a second request for the desired content based on the one or more manifests;
   sending the second request to one or more local devices via a local network to which the system and the local devices are connected; and
   receiving a first portion of the content item from a cache located on one of the local devices.
Clause 8. The method of clause 7, further comprising:
   receiving a second portion of the content item from the content delivery network.
Clause 9. The method of clause 8, wherein,
   presenting a stream of media content comprising the first and second portions of the content, where the first portion and second portions are synchronized in the stream using markers in the first and second portions of the content.
Clause 10. The method of clause 8, wherein,
   sending the second request for the content item to one or more local devices comprises:
   sending the second request via a wireless mesh network.
Clause 11. The method of clause 8, wherein,
   receiving the second portion of the content item from the content delivery network comprises receiving content modulated using quadrature amplitude modulation.
Clause 12. The method of clause 11, wherein,
   receiving the first portion of the content item comprises:
   receiving the first portion of the content item via a WiFi connection.
Clause 13. The method of clause 7, wherein,
   receiving one or more manifests of available cached content comprises:
   receiving one or more manifests from the content delivery network.
Clause 14. The method of clause 7, wherein,
   receiving one or more manifests of available cached content comprises:
   receiving one or more manifests from one of the local devices via the local network.
Clause 15. A method comprising:
   receiving a selection for a content item from a user device;
   sending a first request for the content item to a content delivery network;
   sending a second request for the content item to one or more local devices via a local network to which the local devices are connected;
   receiving a first portion of the content item from a cache located on one of the local devices;
   receiving a second portion of the content item from the content delivery network; and
   presenting a stream of media content comprising the first and second portions of the content, where the first portion and second portions are synchronized in the stream using markers in the first and second portions of the content.
Clause 16. The method of clause 15, wherein:
   sending the request for the content item to one or more local devices comprises sending the second request for the content item via wireless mesh network.
Clause 17. The method of clause 15, wherein,
   receiving the first portion of the content item comprises,
   receiving the first portion of the content item via a WiFi connection.
Clause 18. The method of clause 15, further comprising:
   receiving one or more manifests of available cached content; and
   tailoring the request for the content item based on the one or more manifests.
Clause 19. The method of clause 18, wherein,
   receiving one or more manifests of available cached content comprises:
   receiving a manifest from the content delivery network.
Clause 20. The method of clause 18, wherein,
   receiving one or more manifests of available cached content comprises receiving one or more manifests from one of the local devices via the local network.

## Claims

1. A method comprising:
receiving, by a system, a selection for a content item from a user device;
sending a first request for the content item to a content delivery network;
sending a second request for the content item to one or more local devices via a local network to which the system and the local devices are connected;
receiving a first portion of the content item from a cache located on one of the local devices;
receiving a second portion of the content item from the content delivery network; and
presenting a stream of media content comprising the first and second portions of the content, where the first portion and second portions are synchronized in the stream using markers in the first and second portions of the content.

2. The method of claim 1, wherein, sending the second request for the content item to one or more local devices comprises sending the second request for the content item via a wireless mesh network

3. The method of claim 2, wherein the wireless mesh network comprises two or more households.

4. The method of any of the preceding claims, wherein receiving the second portion of the content item from the content delivery network comprises receiving content modulated using quadrature amplitude modulation.

5. The method of any of the preceding claims, wherein receiving the first portion of the content item comprises receiving the first portion of the content item via a WiFi connection.

6. The method according to any of the preceding claims, further comprising:
accessing or receiving one or more manifests of available cached content; and
tailoring the second request for the content item based on the one or more manifests.

7. The method of claim 6, wherein accessing or receiving one or more manifests of available cached content comprises receiving one or more manifests from the content delivery network.

8. The method of claim 6 or 7, wherein accessing or receiving one or more manifests of available cached content comprises receiving one or more manifests from one of the local devices via the local network.

9. A non-transitory computer-readable medium comprising computer executable instructions, that when executed by a processor, cause the processor to perform a method comprising:
receiving, a selection for a content item from a user device;
sending a first request for the content item to a content delivery network;
sending a second request for the content item to one or more local devices via a local network to which the local devices are connected;
receiving a first portion of the content item from a cache located on one of the local devices;
receiving a second portion of the content item from the content delivery network; and
presenting a stream of media content comprising the first and second portions of the content, where the first portion and second portions are synchronized in the stream using markers in the first and second portions of the content.

10. The non-transitory computer-readable medium according to any of the claims 9, wherein the instructions further cause the processor to:
access or receive one or more manifests of available cached content; and
tailor the second request for the content item based on the one or more manifests.

11. The non-transitory computer-readable medium according to any of the claims 9 or 10, wherein the instructions further cause the processor to perform said accessing or receiving of one or more manifests of available cached content by:
receiving one or more manifests from the content delivery network, or
receiving one or more manifests from one of the local devices via the local network.

12. The non-transitory computer-readable medium according to any of the claims 9-11, wherein the instructions further cause the processor to perform said sending of the second request for the content item to the one or more local devices by sending the second request for the content item via a wireless mesh network.

13. System for delivering content to a user, the system comprising a processor configured to receive computer executable instructions for causing the processor to perform a method comprising:
receiving, a selection for a content item from a user device;
sending a first request for the content item to a content delivery network;
sending a second request for the content item to one or more local devices via a local network to which the local devices are connected;
receiving a first portion of the content item from a cache located on one of the local devices
receiving a second portion of the content item from the content delivery network; and
presenting a stream of media content comprising the first and second portions of the content, where the first portion and second portions are synchronized in the stream using markers in the first and second portions of the content.

14. System according to claim 13, wherein the processor is further configured to receive computer executable instructions for causing the processor to:
access or receive one or more manifests of available cached content; and to
tailor the second request for the content item based on the one or more manifests.

15. System according to claim 13 or 14, wherein the processor is further configured to receive computer executable instructions for causing the processor to perform said accessing or receiving of one or more manifests of available cached content by:
receiving one or more manifests from the content delivery network, or
receiving one or more manifests from one of the local devices via the local network.
